# EUROPEAN PATENT APPLICATION

(11) **EP 2 921 828 A1**
(43) Date of publication of application: **23.09.2015**
(21) Application number: 14275074.4
(22) Date of filing: 17.03.2014
(51) Int. Cl.: G01D 11/30

(54) **Sensor panel**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A sensor panel comprising: a panel structure; a wireless sensor network comprising a plurality of sensor nodes for sensing environmental parameters, each sensor node comprising a transceiver and at least one sensor, wherein the sensor nodes are distributed about the panel structure and are substantially affixed to the panel structure.

## Description

The present invention relates to a sensor panel and in particular to a sensor panel for an aircraft, and further to a system for monitoring an environment using the sensor panel.

It is known to provide a network of sensor nodes, able to communicate wirelessly amongst themselves and a network manager unit, where each sensor node may be positioned independently of the other sensor nodes. Such sensor nodes may alternatively be referred to as 'motes'

Moreover, such sensor nodes are typically small, approximating in some instances to the size of a grain of rice, 5-10mm. Further, such sensors are typically configured for power-efficient operation on account of data transmission protocols such as time synchronisation and frequency hopping.

Typically, such sensor nodes are intended to be scattered liberally about an environment to be monitored, without a particular physical separation or pitch between sensor nodes being contemplated.

According to a first aspect of the invention there is provided a sensor panel comprising: a panel structure; a wireless sensor network comprising a plurality of sensor nodes for sensing environmental parameters, each sensor node comprising a transceiver and at least one sensor, wherein the sensor nodes are distributed about the panel structure and are substantially affixed to the panel structure.

As such, the distances between the sensor units do not vary with time and consequently certain inferences may be drawn from data derived from the network. Such inferences may not be possible or as readily calculable in comparison to distributed sensor units where the distances are either unknown, or have to be determined in realtime.

For example, in a network having first and second sensor nodes configured to monitor stress, if the first sensor node reports an atypical stress at time t, and subsequently the second node reports an equivalent stress at time t+d then the speed of propagation of that stress may be determined accurately and further characteristics inferred.

If the sensor panel is not provided with data processing resources itself, the sensor data may be relayed via the transceiver to a remote unit comprising processing resources.

At least some of the sensor nodes may be distributed across the surface of the panel structure.

As such, the nodes are able to monitor parameters relating to the ambient environment, at the panel-to-environment boundary, such as gas flow.

The panel may be adapted for use as a skin of a vehicle.

The panel structure may be formed from a composite material

The panel structure may be formed from a carbon-fibre composite.

As such the sensor nodes may be more readily integrated into the panel structure to form the panel sensor.

Each of the sensor nodes in the plurality of sensor nodes may comprises a power source, a plurality of sensors, and a controller.

Further, each of the sensor nodes in the plurality of sensor nodes may comprise a power source operable to generate electrical power from an adjacent airflow.

Where the sensors panels are mounted on a vehicle that will tend to move in operation, for example where the sensor panels form the skin of an aircraft, this can tend to provide a reliable way of powering the sensor units, without needing to provide extensive wiring. There may also tend to be a high correlation between the time when power is required at the node and the time when power may be harvested. Thus power storage requirements, and so the bulk and weight of the associated component(s), may be mitigated.

Each of the sensor nodes in the plurality of sensor nodes may comprise a power source operable to generate electrical power from mechanical vibrations.

Each of the sensor nodes in the plurality of sensor nodes may comprise a power source operable to generate electrical power from temperature changes.

The sensor panel may further comprise a supercapacitor, the supercapacitor being connected to the power source and being operable to store electrical energy.

As such, the sensor panel is able to harvest energy from the environment in advance of the time when it may be required. Thus, where a harvestable energy source is unreliable, the function of the sensor panel need not be compromised by intermittent scarcity of that particular harvestable energy source.

The plurality of sensor nodes may comprise at least one of, or a combination of, the following: an air flow sensor, a GNSS transceiver, an accelerometer, a temperature sensor, a magnetometer, a strain gauge, a gyroscope.

According to a further aspect of the invention, there is provided a system for monitoring the environment comprising: a panel sensor according to any one of the preceding claims, a remote unit comprising a receiver operable to communicate with the sensor nodes, and a display for graphically representing the environmental parameters.

According to a further aspect of the invention there is provided an aircraft comprising a panel sensor according to any one of the preceding claims.

So that the invention may be better understood, an exemplary embodiment shall now be described with reference to the following figures, of which:
Figure 1 shows a schematic diagram of a sensor node as may be used in the present invention;
Figure 2 shows an aircraft provided with a sensor panel according to the present invention; and
Figure 3 shows a sensor panel according to the present invention arranged to communicate with a network manager unit.

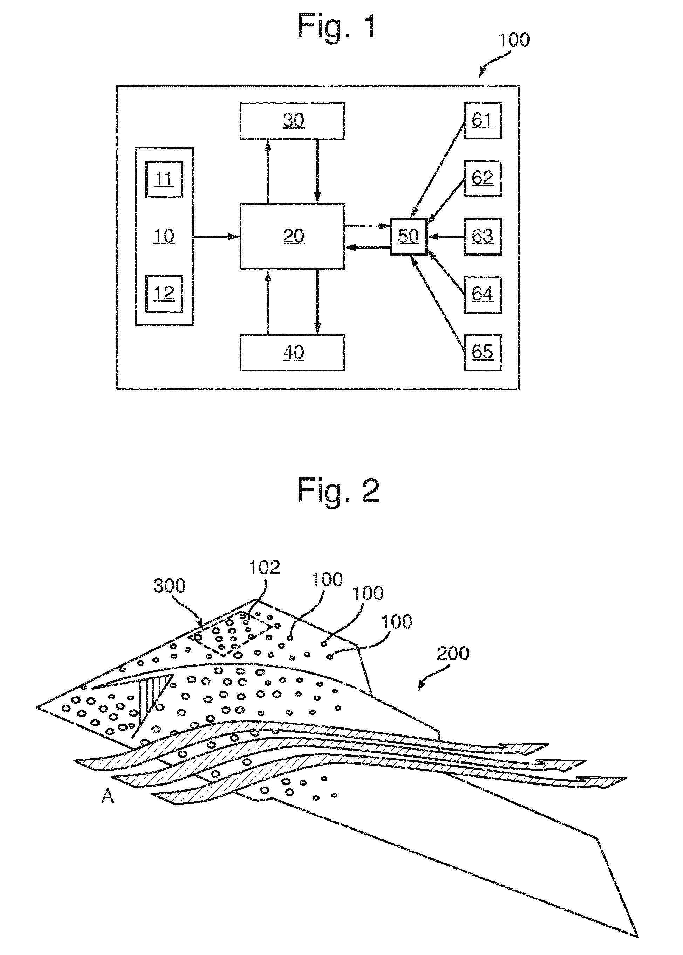

Referring to Figure 1 there is shown generally at 100 a sensor node. The sensor node 100 comprises a power source 10, a controller 20, a transceiver 30, an external memory 40, an analogue-to-digital and digital-to-analogue converter 50 (A/D), and sensors 61, 62, 63, 64 and 65.

The power source 10 is connected to the controller 20, as shown, to supply electrical power. The power source 10 may be further connected to other components within the sensor node 100 (depending on such components requirements). For example, particular types of sensor may require a biasing voltage to be applied.

The transceiver 30 is operable to transmit and receive signals in a band at around 60 GHz, and in particular, 55-65 GHz.

This frequency of RF signal provides secure short range communication between nodes because such signals are readily absorbed by air and so the range of the signal is limited. Thus the risk of hostile snooping, for example, is mitigated. Further, the transceiver 30 is operable to transmit to at least one other node using a directed signal beam, which directed range tends to mitigate the risk of snooping even further.

In the present embodiment, the power source 10 is operable to harvest sufficient energy from its environment in order to be able to power the sensor node 100. To this end the power source 10 is fitted with a piezoelectric transducer 11 for converting mechanical vibration (such as may be present in an airframe) into electrical energy, and a means, such as a supercapacitor 12, for storing such electrical energy until the sensor device may require it. Alternatively or additionally the power source 10 may be provided with a piezoelectric transducer for converting thermal energy into electrical energy, and once again a supercapacitor may be provided. Alternatively or additionally the power source may be provided with a turbine or other device capable of converting adjacent gas flow into electrical energy.

The controller 10 is further operably connected to the transceiver 30, the external memory 40, and the A/D 50.

The A/D 50 is connected to each of the sensors 61, 62, 63, 64 and 65.

The first sensor 61 is a gas flow sensor for monitoring the speed and/or pressure of the ambient gas environment.

The second sensor 62 is a transceiver for geo-positioning using a Global Navigation Satellite System (GNSS) and in particular the Global Positioning System (GPS).

The third sensor 63 is an accelerometer.

The fourth sensor 64 is a temperature sensor, an in particular may comprise a thermocouple.

The fifth sensor 65 is a magnetometer.

Further sensors may be present in further embodiments of the invention in addition to or as alternatives to any of the above sensors. Such further sensors would include strain gauges and gyroscopes.

Referring to figure 2, there is shown generally at 200 an aircraft exposed to environmental parameters, such as airflow A, which is illustrated passing over the port wing.

The outer structure of the aircraft 200 comprises a plurality of sensor panels, such as the highlighted sensor panel 300. Such sensor panels provide the skin of the aircraft 200.

Each sensor panel 300 is provided with a plurality of sensor nodes 100 distributed about a structural panel 102, each sensor node 100 being in a fixed location on the panel.

In the present embodiment, the structural panel is formed from a composite carbon fibre structure.

A plurality of such sensor panels 300 is provided. Thus the skin of the aircraft is provided with a distributed network of sensor nodes 100.

As shown, the sensor nodes 100 are provided at the surface of the skin. However, depending on the parameter to be detected/monitored, sensor nodes may be embedded within the structure of the panel.

Further, the sensor nodes 100 are shown distributed in a regular pattern over the surface in order to provide consistent coverage of the skin. However, in further embodiments of the invention, the sensors may be concentrated in certain regions of the skin (i.e. the number of sensor per unit area may vary across the panel). For example, where higher resolution data relating to environmental parameters is of interest, a higher concentration of sensor nodes 100 may be provided.

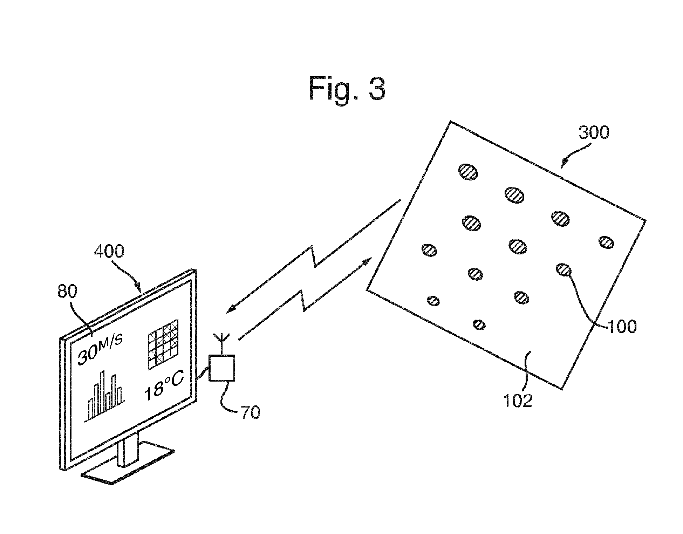

Referring to figure 3, there is shown a system for monitoring a set of environmental parameters using the sensor panel 300. In addition to the sensor panel 300, the system comprises a network manager unit 400.

The network manager unit 400 comprises a base station 70 and a display 80. The base station 70 comprises a transceiver for interrogating the sensor nodes 100 of the sensor panel 300 and consequently (or otherwise) receiving data from the panel 300. The transceiver enables the base station 70 to communicate with the nodes over the 55-65GHz band and as such, the base station should be positioned in proximity to at least one of the sensor nodes 100 of the network.

Further, the base station 70 comprises a data processor for analysing the data and/or translating the data into a feed for display 80, which feed tends to display readily understandable representations of the environmental data derived from the sensor panel 300.

For instance the base station 70 may generate a feed for the display 80 which creates a visual image representing the stress or temperature characteristics within the panel 300.

For instance, the base station 70, may generate a feed for the display 80 which creates a visual image representing the gas flow over the panel 300.

Whilst a particular embodiment has been focussed-on in the above description, other embodiments within the scope of the present invention are contemplated and would be apparent to the skilled man, given this description.

## Claims

1. A sensor panel comprising
A panel structure
a wireless sensor network comprising a plurality of sensor nodes for sensing environmental parameters, each sensor node comprising a transceiver and at least one sensor,
wherein the sensor nodes are distributed about the panel structure and are substantially affixed to the panel structure.

2. A sensor panel according to claim 1 wherein at least some of the sensor nodes are distributed across the surface of the panel structure.

3. A sensor panel according to claim 1 or claim 2 wherein the panel is adapted for use as a skin of a vehicle.

4. A sensor panel according to claim any one of the preceding claims wherein the panel structure is formed from a composite material

5. A sensor panel according to any one of the preceding claims wherein the panel structure is formed from a carbon-fibre composite.

6. A sensor panel according to any one of the preceding claims wherein each of the sensor nodes in the plurality of sensor nodes comprises a power source, a plurality of sensors, and a controller.

7. A sensor panel according to any of the preceding claims wherein each of the sensor nodes in the plurality of sensor nodes comprises a power source operable to generate electrical power from an adjacent airflow.

8. A sensor panel according to any of the preceding claims wherein each of the sensor nodes in the plurality of sensor nodes comprises a power source operable to generate electrical power from mechanical vibrations.

9. A sensor panel according to any of the preceding claims wherein each of the sensor nodes in the plurality of sensor nodes comprises a power source operable to generate electrical power from temperature changes.

10. A sensor panel according to any one of claims 6 to 9 wherein the sensor panel further comprises a supercapacitor, the supercapacitor being connected to the power source and being operable to store electrical energy.

11. A sensor panel according to any of the preceding claims, wherein the plurality of sensor nodes comprise at least one of, or a combination of, the following: an air flow sensor, a GNSS transceiver, an accelerometer, a temperature sensor, a magnetometer, a strain gauge, a gyroscope.

12. A system for monitoring the environment comprising
a panel sensor according to any one of the preceding claims,
a remote unit comprising a receiver operable to communicate with the sensor nodes, and a display for graphically representing the environmental parameters.

13. An aircraft comprising a panel sensor according to any one of the preceding claims.
